# EUROPEAN PATENT SPECIFICATION

(11) **EP 1 116 444 B1**
(45) Date of publication and mention of the grant of the patent: **05.11.2003**
(21) Application number: 00127670.8
(22) Date of filing: 18.12.2000
(51) Int. Cl.: A23L 1/182, A23L 1/10

(54) **Instant soakable rice**
Getrockneter schnellkochender Reis
Riz déshydraté à cuisson rapide

(30) Priority: 05.01.2000 SG 200000077
(43) Date of publication of application: 18.07.2001
(73) Proprietor: SOCIETE DES PRODUITS NESTLE S.A., 1800 Vevey (CH)
(72) Inventor: Lee, Edmund, 8310 Grafstal (CH); Wissgott, Ulrich, Mirage Tower, Singapore 239426 (SG)
(74) Representative: Wavre, Claude-Alain

(56) References cited:
- EP-A- 0 722 669
- GB-A- 1 453 759
- US-A- 3 582 352
- US-A- 4 233 327
- US-A- 4 571 341
- US-A- 4 794 012

## Description

The invention provides a method for preparing an instant soakable rice product which comprises dehydrated rice. The instant soakable rice product can be rehydrated in a relatively short period of time by the addition of hot water and is then ready for consumption.

In many parts of the world rice is the staple food, particularly in Asia. In South-East Asia, the average per capita consumption is 100 kg. In many Asian countries, rice is served at least twice a day, normally together with a protein or vegetable addition. With changing life styles, both in Asia and in other parts of the world where rice is a common food type, there is a need for packaged convenience rice dishes which are easy and quick to prepare, but which have a texture and taste similar to fresh/in-house prepared rice.

A method has not previously been disclosed for obtaining an instant soakable rice product which comprises dehydrated rice. Processed rice products conventionally used include frozen rice, retort packaged rice, canned rice and aseptic packaged rice. These processed rice products which are conventionally available and used as convenience foods, can be separated into two main types, depending on their method of preparation.

Full moisture, instant rice products comprise processed full-moisture whole-grain rice that requires heating before consumption for up to 2-3 minutes in a microwave oven or 10-13 minutes in boiling water, for example, "boil-in the bag" products, ie the rice has to be cooked. Examples of such products include:

### Canned Rice

Ready-cooked, canned rice for both microwave and conventional reheating. The rice is usually emptied from the can into a plate or bowl and covered with saran wrap prior to microwave. It is available as white, brown or ethnic style rice.

### Aseptically Packaged Rice

Rice is cooked and acidified prior to packaging in a clean environment. A high moisture and oxygen barrier material is used for packaging of such rice. It requires special equipment for its manufacture, as well as high packaging costs.

### Frozen Rice

This consists of cooked and then frozen convenience rice. It is packed in multi-serving and single-portion sachets and suits either the microwave or conventional reheating. Frozen rice is normally ready to serve in around 3 minutes by microwave heating. Although convenient as a processed rice product, it requires specialist freezing and refrigeration equipment both for its manufacture and storage.

### Retort Packaged Rice

Ready cooked rice is packaged in high moisture and oxygen barrier plastics or metallic foil prior to retort heat treatment. This processed product requires specialised sterilization equipment and its manufacture and packaging costs are high.

The second type of product is known as quick cooking rice which consists of processed dehydrated whole-grain rice, which also requires cooking for 2-3 minutes, but often up to 10 minutes in a microwave oven, or for 10-13 minutes in boiling water over a cooker, prior to consumption. Quick cooking rice is faster to cook than raw, unprocessed rice, but nevertheless must first be cooked. This form of instant rice may also be freeze-dried.

However, there is no instant rice product available which consists of processed dehydrated rice (whole-grain) that can be ready for consumption within 3-5 minutes merely following the addition of boiling water and which has a texture similar to rice cooked in a conventional manner. A particular advantage of such a product is that no conventional cooking or microwave cooking is required, merely the addition of hot water to allow rehydration of the rice.

The present invention aims to provide a method for preparing an instant soakable rice product comprising dehydrated rice which can be rehydrated and ready to eat within 3-5 minutes by the addition of hot water.
The advantage of the instant soakable rice of the invention is, in particular, that the texture of the rice is similar to that of rice cooked in a traditional way, for example, rice cooked in an automatic or traditional Chinese rice cooker, in boiling water over a conventional cooker or in a microwave oven. When unprocessed rice is cooked by conventional means the moisture content of the cooked rice is within a range of approximately 55-70% moisture content, depending on the type of rice. The average cooking time of the rice for one serving (for approximately 275 g of rice in 320 ml water) is between 16-18 minutes depending on the type of rice.

The instant soakable rice of the invention has good hydrostability so that it does not disintegrate in hot water.

In addition, the method of the present invention minimises starch loss from the rice. The process of the present invention is more environmentally-friendly than methods available in the prior art conventionally used in the industry for producing processed rice products and allows water used in the process to be recycled. The process, therefore, conserves water and energy and is more economical to run. The method of the invention is a continuous process run on a continuous line apparatus.

The present invention, therefore, provides for the first time a method for industrially processing rice to obtain an instant soakable rice product comprising dehydrated rice which has the same quality as rice produced by conventional cooking techniques. The invention relates to a continuous process for industrially manufacturing instant rice by fully precooking the whole rice grains under saturated steam atmosphere, drying and puffing it to exhibit instant rehydration properties. The processing conditions allow maximum water absorption and fully cook the rice, whilst being environmentally friendly and generating minimum water wastage.

The present invention provides a method for preparing instant rice which comprises a series of sequential steps comprising a first soaking step, a first steaming step, a second soaking step and a second steaming step to allow 55% or more water to be absorbed by the rice. This is followed by drying the rice and intense puffing of the rice to result in instant dehydration.

Hence, the invention provides a method for preparing an instant soakable rice product comprising dehydrated rice, which comprises:
- (a): a first soaking step, wherein the rice is soaked in water at ambient temperature to allow water absorption prior to a first steaming step;
- (b): a first steaming step, to partially gelatinise the outer surface of the rice grain to allow further absorption of water;
- (c): a hot water spraying step, wherein water is sprayed over the rice to allow the moisture level to reach its maximum within rice grains, the temperature of the water being higher than the temperature used in the first soaking step, optionally the water is recycled from this step;
- (d): a second steaming step, to complete gelatinisation of the starch in said rice;
followed by
- (e): pre-drying the rice; and
- (f): hot air puffing of the rice,
to obtain a soakable rice product, wherein at least steps (b), (c) and (d) are carried out on a continuous line apparatus, preferably in a single steam tunnel.

The method of the invention achieves a processed rice product having the same texture as conventionally cooked rice, and preferably achieves a moisture content of up to 75%, preferably between 55-60% during processing. This value for moisture content coincides with the moisture content of rice during conventional cooking and leads to a home cooked rice product having the same or similar texture to unprocessed rice. The combination of soaking and steaming steps in the method of the present invention results in the desirable moisture content of the rice.

The invention further provides an instant soakable rice product comprising dehydrated rice obtained by the method of the invention.

In the first soaking step, the rice, for example, polished raw rice kernel, is soaked in water at ambient temperature, preferably at a temperature between 15-35°C, more preferably 28°C, for example, at a 1:1 ratio of rice to water for between 20 minutes to 3 hours, preferably one hour. This step allows moisture absorption prior to steaming so that gelatinisation of starch can be facilitated. Moreover, at ambient temperature no significant starch loss will result. Soaking at ambient temperature enables a certain level of moisture absorption of the rice grain that otherwise could only be attained with longer steaming times. The moisture content of rice after this stage is usually between 15-32%. Absorption of moisture for rice falls into an asymptotic moisture absorption curve. A preferred time of one hour will suit certain types of rice, for example, Thai rice, to ensure the highest possible level of moisture absorption in the shortest time. However, the moisture absorption curve, and therefore, the soaking time, will depend on the type of rice used in the process of the invention. The first soaking step may be carried out by spraying the rice with water, which can then be recycled.

In comparison, when rice is cooked-in an automatic rice cooker in a conventional manner the rice is boiled until all water is absorbed and the starch is gelatinised. After which, only steam is present within the rice cooker. A final moisture content of between 55-70% is achieved.

In the first steaming step after soaking, the rice undergoes steaming to partially gelatinise the outer surface of the rice grain. This step is taken to prevent starch loss during the second soaking step which is carried out at a higher temperature compared with the first soaking step. Trials conducted on rice which undergo soaking without this first steaming step indicate that more starch is lost during soaking.

During this step, the rice may be conveyed by a belt through a steaming tunnel where steam is injected into the tunnel at a temperature of between 98-104°C, preferably 100°C. The rice is processed in this step for between 1-15 minutes, preferably 5 minutes at a steam pressure. The purpose of this step is not to cook the rice, but merely to gelatinise the outer surface of the rice grain to prevent starch leeching during the later soaking stage. Therefore, deviating from the conditions of this step will result in under or over cooked rice. If steaming is carried out for less than 3 minutes, it may not be sufficient to ensure the outer surface of all the rice grains are uniformly gelatinised.

The main function of the hot water spraying step is to increase the level of moisture within the rice grain to up to 70%, preferably 55-60%. During the second soaking step, the rice is showered with hot water, for example, at a temperature of 85-95°C, preferably 90°C for approximately 3-7 minutes, preferably 5 minutes. A suitable temperature, however, is just above the gelatinisation temperature (55-80°C) of rice, but lower than the boiling point of water, so that minimal starch loss occurs. The rice is fed from the first steaming step along a continuous line apparatus and sprayed with water at the desired temperature for the desired amount of time. The water may then be recycled. This enables the process of the present invention to be continuous, for example, using a single steam tunnel, and enables an existing line apparatus to be easily modified to carry out the different operations of steaming and soaking. The amount and manner of water sprayed can be modified depending on the desired texture of the final rice product.

The heat during this hot water spraying step promotes gelatinisation of the starch within the rice grain. Trials conducted on processing rice solely by steaming alone show that without the soaking steps, a final moisture level of 60% cannot be obtained in rice. Rice steamed for as long as 40 minutes, without the soaking step, has a moisture content of only 35-40%. Without penetration of water during the soaking step, gelatinisation of starch within the grain will be less likely.

At lower temperatures, soaking will be required for a longer time in order to attain the desired moisture level. At a higher temperature, or soaking for a longer time, starch leeching occurs which is generally undesirable.

The rice then undergoes steaming in a second steaming step. The steam temperature is between 98 to 104°C, preferably 100°C. The rice is exposed to steam during this second step for approximately 5-20 minutes, preferably 10 minutes to achieve a final total solids content of between 37-43%, preferably 40%, that is, a moisture level of at least 60%. This second steaming step is important to achieve full gelatinisation of the rice grain. In addition, the steam prevents stickiness between the cooked rice grains to ensure the attainment of a product which is more desirable to the consumer.

The rice is then subjected to drying, for example, conventional hot air drying, to achieve a final total solids content of between 86-90%, preferably 88%, that is, a moisture level of between 8-15%, preferably 12%. Drying takes place preferably over 10-20 minutes, preferably 15 minutes, with an air velocity of between 1.0-2.0 m/s, preferably 1.5 m/s, at a temperature of between 90-150°C, preferably 135°C. The rice may be conveyed through a one or multi-stage dryer to achieve the final solids content desired.

If drying is conducted at too high a temperature, too high an air flow or for too long a time, the rice is too dry which could lead to case hardening which affects the puffing of the product.

The moisture level achieved after pre-drying is preferably between 8-20% since this will determine the puffability of the rice. If the pre-dried rice has less than 8% moisture, then the rice may appear yellowish from over drying and furthermore, it may not be able to be puffed due to case hardening. If the moisture content is too high, for example, greater than 20%, the end product may have a higher moisture content than the 4-5% range preferred. This will affect the shelf-life of the product. However, in the case of an end product with a higher moisture content than the range 4-5%, it is possible to introduce a post-drying step which will help lower the moisture content.

Drying is followed by puffing preferably at a temperature of between 190-210°C, more preferably at a temperature of 200°C for a period of between 10-20 seconds, preferably 15 seconds at an air velocity of between 12-20 m/s, preferably between 18-20 m/s. The final product has a moisture content of between 4-5% and has a porous structure. This allows easy and faster rehydration of the product in use.

The instant soakable rice of the invention may then be used to manufacture a convenience rice dish, for example, with the addition of further ingredients such as dehydrated vegetables or protein, additives, flavourings, colourings, garnishings etc. The product may be packaged as desired for purchase by the consumer.

For example, the instant rice product of the invention may be packaged in a shrink-wrapped polystyrene bowl with a polystyrene lid having small holes at two ends of the container for draining out the excess water added to rehydrate the rice. Inside the bowl, there is a sachet of dehydrated rice, a sachet of tastemaker and a sachet of the dehydrated garnishing. Rehydration of the instant, dehydrated soakable rice and dehydrated garnishing are carried out by pouring excess hot water at a temperature of greater than 95°C into the dehydrated products in the polystyrene bowl. Rehydration time falls within the range of 3-5 minutes. Excess water may then be drained from the holes by the side of the lid of the bowl. The lid can then be removed by the consumer and the tastemaker added. The rice dish is then mixed well before serving.

The soakable rice product of the invention is preferably whole-grain rice, and more preferably medium-high amylose content grain of the type which is popular in Asia.

The steps of the method of the present invention may be carried out using conventional processing apparatus, for example, on a continuous processing line incorporating conventional apparatus for sequential soaking and steaming of the rice under the suitable processing conditions applicable to each stage. The rice may move through the apparatus continuously on a conveyor belt. Optionally, the instant soakable rice of the invention may be produced as part of an existing rice porridge line extension.

The process of the invention will now be described with reference to the following example, which is not intended to limit the invention.

### Example 1

The following Table describes a suitable operation of the method of the present invention.

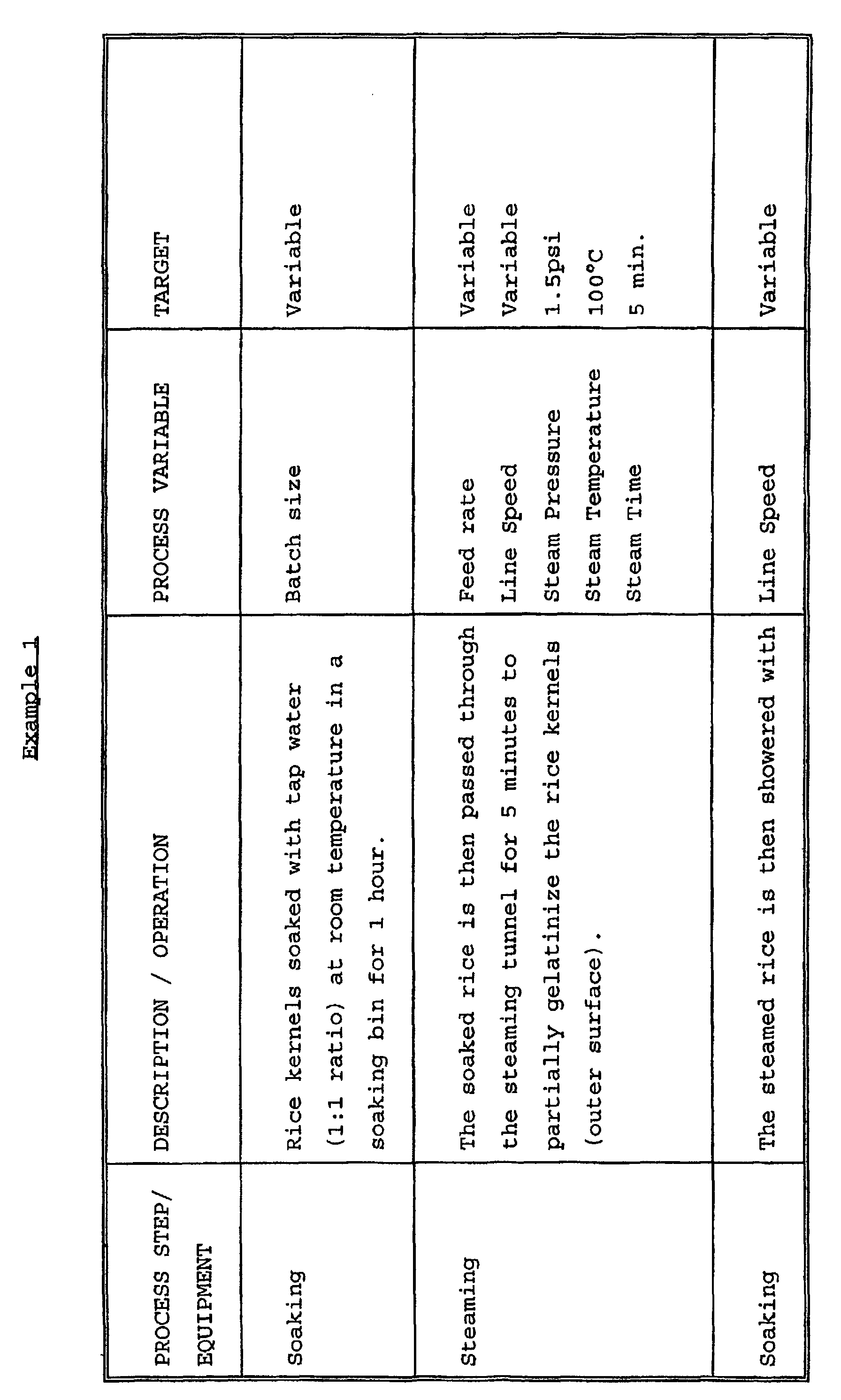

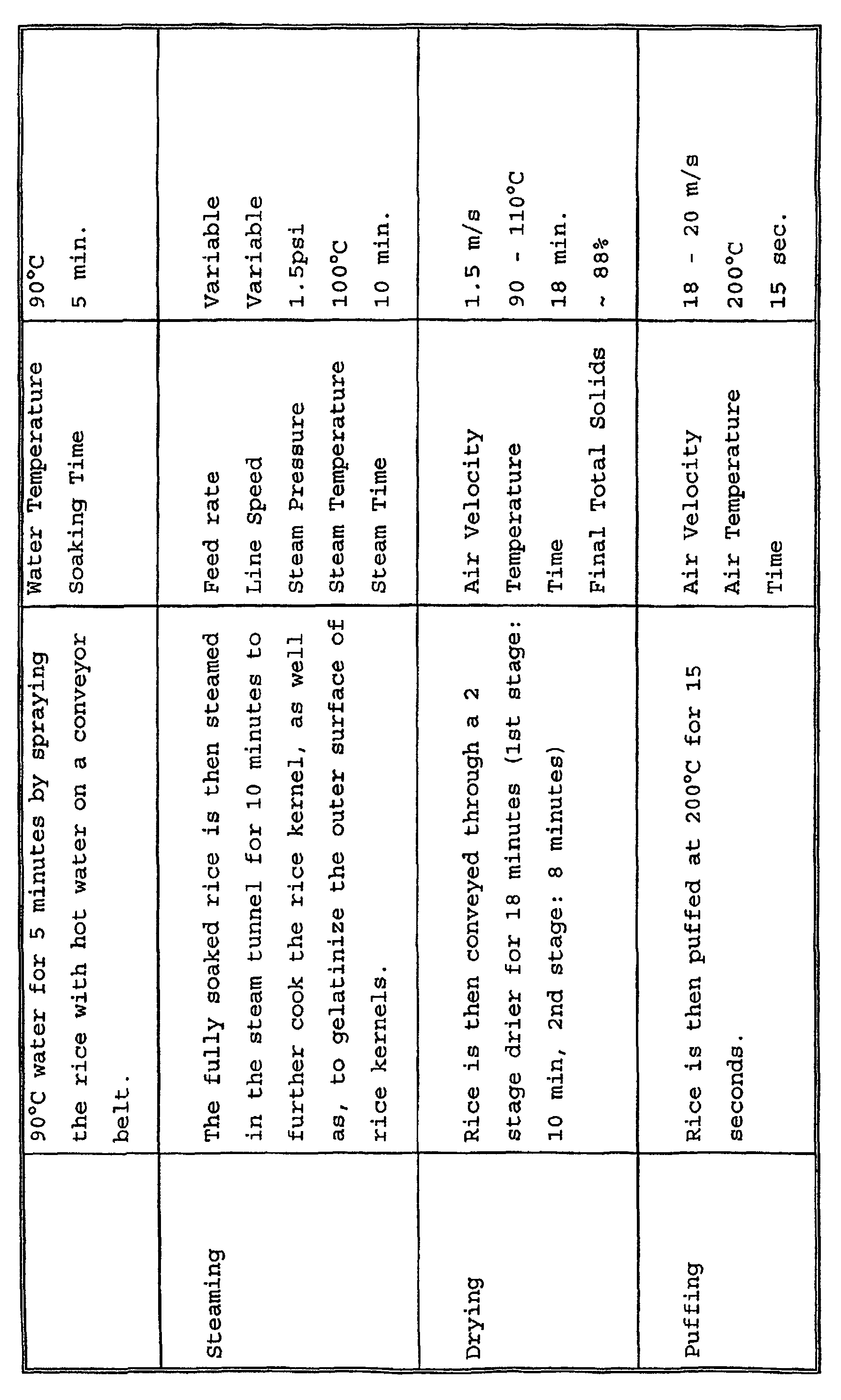

## Claims

1. A method for preparing an instant soakable rice product comprising dehydrated rice, which comprises:
(a) a first soaking step, wherein the rice is soaked in water at ambient temperature to allow water absorption prior to a first steaming step;
(b) a first steaming step, to partially gelatinise the outer surface of the rice grain;
(c) a hot water spraying step, wherein the rice is sprayed with water at a temperature higher than the temperature of the water in the first soaking step, to increase the moisture level within the rice grains;
(d) a second steaming step, to gelatinise the starch in said rice;
followed by
(e) pre-drying the rice; and
(f) hot air puffing of the rice, to obtain a soakable rice product, wherein at least steps (b), (c) and (d) are carried out on a continuous line.

2. The method of claim 1 wherein the rice is whole-grain rice.

3. The method of claim 1 wherein in the first soaking step, the rice is steeped in water for 60 minutes.

4. The method of claim 1 wherein the moisture content of the rice after the first soaking step is between 15-32%.

5. The method of claim 1 wherein in the first steaming step, the rice is subjected to steam at a temperature of 100°C for 5 minutes.

6. The method of claim 1 wherein the hot water spraying step is carried out at a temperature of 90°C.

7. The method of claim 1 wherein the moisture content of the rice after the second soaking step is between 55-60%.

8. The method of claim 7 wherein the moisture content of the rice is 60%.

9. The method of claim 1 wherein the moisture level of the rice after the pre-drying step is between 8-20%.

10. The method of claim 1 wherein the temperature of puffing is 200°C.

11. The method of claim 1 wherein the final soakable rice product has a moisture content of between 4-5%.

12. The method of claim 1 wherein the water used in at least the second soaking step is recycled.

13. A soakable rice product obtained by the method of claim 1.

## Patentansprüche

1. Verfahren zur Herstellung eines einweichbaren Instant-Reisprodukts, das getrockneten Reis umfaßt, das umfaßt:
(a) eine erste Einweichstufe, bei der der Reis in Wasser bei Umgebungstemperatur eingeweicht wird, um eine Wasserabsorption vor einer ersten Dampfbehandlungsstufe zu ermöglichen;
(b) eine erste Dampfbehandlungsstufe, um die äußere Oberfläche des Reiskorns teilweise zu verkleistern;
(c) eine Heißwasser-Sprühstufe, bei der der Reis mit Wasser einer Temperatur besprüht wird, die höher ist als die Temperatur des Wassers in der ersten Einweichstufe, um den Feuchtigkeitsgehalt innerhalb der Reiskörner zu erhöhen;
(d) eine zweite Dampfbehandlungsstufe, um die Stärke in dem Reis zu verkleistern,
gefolgt von
(e) einem Vortrocknen des Reises; und
(f) einem Heißluft-Puffen des Reises, um ein einweichbares Reisprodukt zu erhalten, wobei wenigstens die Stufen (b), (c) und (d) auf einer kontinuierlichen Produktionslinie durchgeführt werden.

2. Verfahren nach Anspruch 1, wobei der Reis Vollkornreis ist.

3. Verfahren nach Anspruch 1, wobei in der ersten Einweichstufe der Reis für 60min. in Wasser geweicht wird.

4. Verfahren nach Anspruch 1, wobei der Feuchtigkeitsgehalt des Reises nach der ersten Einweichstufe zwischen 15 bis 32% liegt.

5. Verfahren nach Anspruch 1, wobei in der ersten Dampfbehandlungsstufe der Reis einem Dampf bei einer Temperatur von 100°C für 5min. ausgesetzt wird.

6. Verfahren nach Anspruch 1, wobei die Heißwasser-Sprühstufe bei einer Temperatur von 90°C durchgeführt wird.

7. Verfahren nach Anspruch 1, wobei der Feuchtigkeitsgehalt des Reises nach der zweiten Einweichstufe zwischen 55 bis 60% liegt.

8. Verfahren nach Anspruch 7, wobei der Feuchtigkeitsgehalt des Reises 60% beträgt.

9. Verfahren nach Anspruch 1, wobei der Feuchtigkeitsgehalt des Reises nach der Vortrockenstufe zwischen 8 bis 20% liegt.

10. Verfahren nach Anspruch 1, wobei die Temperatur beim Puffen 200°C beträgt.

11. Verfahren nach Anspruch 1, wobei das endgültige einweichbare Reisprodukt einen Feuchtigkeitsgehalt von zwischen 4 bis 5% aufweist.

12. Verfahren nach Anspruch 1, wobei das Wasser, das wenigstens in der zweiten Einweichstufe verwendet wird, durchgeführt wird.

13. Einweichbares Reisprodukt, das nach dem Verfahren von Anspruch 1 erhalten wird.

## Revendications

1. Procédé pour la préparation d'un produit consistant en riz à imbibition instantanée, comprenant un riz déshydraté, qui comprend :
(a) une première étape d'imprégnation, dans laquelle le riz est immergé dans de l'eau à température ambiante pour permettre l'absorption d'eau avant une première étape de traitement à la vapeur ;
(b) une première étape de traitement à la vapeur, pour gélatiniser partiellement la surface extérieure du grain de riz ;
(c) une étape de pulvérisation d'eau chaude, dans laquelle le riz est soumis à une pulvérisation d'eau à une température supérieure à la température de l'eau dans la première étape d'imprégnation, pour augmenter la teneur en humidité dans les grains de riz ;
(d) une seconde étape de traitement à la vapeur, pour gélatiniser l'amidon dans ledit riz ;
avec ensuite
(e) le préséchage du riz ; et
(f) le soufflage du riz avec de l'air chaud, pour obtenir un produit consistant en riz apte à l'imbibition, au moins les étapes (b), (c) et (d) étant mises en oeuvre sur une chaîne continue.

2. Procédé suivant la revendication 1, dans lequel le riz consiste en riz à grains entiers.

3. Procédé suivant la revendication 1, dans lequel, dans la première étape d'imprégnation, le riz est trempé dans de l'eau pendant 60 minutes.

4. Procédé suivant la revendication 1, dans lequel la teneur en humidité du riz après la première étape d'imprégnation est de 15 à 32 %.

5. Procédé suivant la revendication 1, dans lequel, dans la première étape de traitement à la vapeur, le riz est soumis à de la vapeur d'eau à une température de 100°C pendant 5 minutes.

6. Procédé suivant la revendication 1, dans lequel l'étape de pulvérisation d'eau chaude est mise en oeuvre à une température de 90°C.

7. Procédé suivant la revendication 1, dans lequel la teneur en humidité du riz après la seconde étape d'imprégnation est de 55 à 60 %.

8. Procédé suivant la revendication 7, dans lequel la teneur en humidité du riz est de 60 %.

9. Procédé suivant la revendication 1, dans lequel la teneur en humidité du riz après l'étape de préséchage est de 8 à 20 %.

10. Procédé suivant la revendication 1, dans lequel la température de soufflage est égale à 200°C.

11. Procédé suivant la revendication 1, dans lequel le produit final consistant en riz apte à l'imbibition a une teneur en humidité de 4 à 5 %.

12. Procédé suivant la revendication 1, dans lequel l'eau utilisée dans au moins la seconde étape d'imprégnation est recyclée.

13. Produit consistant en riz apte à l'imbibition obtenu par le procédé suivant la revendication 1.
